# EUROPÄISCHE PATENTSCHRIFT

(11) **EP 2 554 878 B1**
(45) Veröffentlichungstag und Bekanntmachung des Hinweises auf die Patenterteilung: **13.07.2016**
(21) Anmeldenummer: 11006381.5
(22) Anmeldetag: 03.08.2011
(51) Int. Cl.: F16J 15/32

(54) **Dichtung**
Seal
Joint d'étanchéité

(43) Veröffentlichungstag der Anmeldung: 06.02.2013
(73) Patentinhaber: Carl Freudenberg KG, 69469 Weinheim (DE)
(72) Erfinder: Lutaud, Dominique, 52360 Orbigny au Mont (FR); Humblot, Luc, 52600 Rosof sur Amance (FR)
(74) Vertreter: Kress, Jean-Jacques Gilbert

(56) Entgegenhaltungen:
- EP-A1- 2 280 201
- EP-A2- 0 347 587
- WO-A1-2008/009317
- DE-C1- 3 631 887
- US-A1- 2003 031 828

## Beschreibung

### Technisches Gebiet

Die Erfindung betrifft eine Dichtung, umfassend einen Tragring mit einem Axialflansch und einer Dichtscheibe, die an dem Tragring angeordnet ist und den Axialflansch außenumfangsseitig umgibt.

### Stand der Technik

Aus dem Stand der Technik sind Dichtungen bekannt, die eine Dichtscheibe mit einer dynamischen Dichtlippe, gebildet aus einem PTFE-Compound aufweisen. Meist weisen diese Dichtungen eine statische Dichtung, gebildet aus einem elastomeren Werkstoff auf. Dabei ist ein Stützkörper mit einem elastomeren Werkstoff umspritzt, wobei der Werkstoff so geformt ist, dass ein Anbindungsbereich für die Dichtscheibe und eine statische Dichtung entsteht. Es sind auch Dichtungen bekannt, bei denen die statische Dichtung ebenfalls aus der Dichtscheibe und damit aus einem PTFE-Compound gebildet ist. Dabei ist aber problematisch, dass sich die Dichtscheibe beim Montieren der Dichtung in die Gehäusebohrung ablösen kann, so dass zum Einen die Montage erschwert ist und zum Anderen die Dichtung zerstört werden kann.

Aus der DE-C-36 31 887 und der US 2003/0031828 sind Dichtungen gemäß dem Oberbegriff des Anspruchs 1 bekannt, welche jedoch wegen ihrer Montageart den vorgenannten Nachteilen nicht ausgesetzt sind. In der Tat werden diese bekannten Dichtungen mit ihren Radialflanschen nach Vorne gerichtet (also in Einführrichtung) in die Gehäusebohrungen montiert.

### Darstellung der Erfindung

Der Erfindung liegt die Aufgabe zugrunde, die Dichtung der eingangs genannten Art derart zu verbessern, dass die Montage erleichtert ist.

Diese Aufgabe wird mit den Merkmalen von Anspruch 1 gelöst Auf vorteilhafte Ausgestaltungen nehmen die Unteransprüche Bezug.

Zur Lösung der Aufgabe steht die Dichtscheibe an dem freien Ende des Axialflansches über und bildet dadurch einen Überstand aus. Dabei bedeckt die Dichtscheibe den Axialflansch vollständig und liegt an diesem an, wobei die Dichtscheibe stoffschlüssig mit dem Axialflansch verbunden ist. Die stoffschlüssige Verbindung wird durch ein Klebemittel erzeugt, welches zwischen dem Tragring und der Dichtscheibe angeordnet ist. Durch den Überstand, der über den Axialflansch hinaussteht, ist die Montage erleichtert. Bei fehlendem Überstand ergibt sich zwischen Dichtscheibe und Axialflansch ein Spalt Bei der Montage wirken je nach Auslegung der Durchmesser von Dichtung und Gehäusebohrung starke Kräfte in radialer und axialer Richtung auf die Dichtung, wobei insbesondere die in axialer Richtung wirkenden Kräfte ein Abscheren der Dichtscheibe von dem Axialflansch bewirken können. Dadurch kann die Dichtung zerstört werden oder aber zumindest die statische Dichtwirkung herabgesetzt sein. Diese Nachteile werden durch den erfindungsgemäßen Überstand überwunden. Der Überstand überdeckt den Axialflansch, so dass die in axialer Richtung wirkenden Kräfte kein Abscheren der Dichtscheibe von dem Axialflansch bewirken können. Dabei ist der Überstand radial nach innen in Richtung der Mittelachse abgebogen. Dadurch entsteht im Bereich des Überstandes eine Durchmesserreduzierung, durch den sich der Außendurchmesser der Dichtung reduziert. Durch diese Durchmesserreduzierung wirkt zum Einen als Zentrierhilfe, so dass die Positionierung der Dichtung in der Gehäusebohrung erleichtert Ist und zum Anderen bewirken angreifende Axialkräfte, dass sich die Dichtscheibe an den Axialflansch anlegt. Dies wirkt einer Scherbeanspruchung entgegen, so dass sich die Dichtscheibe während der Montage nicht von dem Tragring ablösen kann.

Die Dichtscheibe besteht vorzugsweise aus einem PTFE-Compound. Zur Herabsetzung der Kriechneigung kann der PTFE-Compound zumindest in dem Bereich, der dem Axialflansch zugeordnet ist, mit einer Faserverstärkung, beispielsweise aus Glasfasern, versehen sein. Durch den Einsatz von PTFE als Werkstoff für eine statische Dichtung reduzieren sich die Montagekräfte, weil statische Dichtungen aus PTFE äußerst geringe Reibwerte aufweisen. Im Vergleich zu elastomeren Werkstoffen weist PTFE eine erheblich geringere Elastizität auf. Es hat sich jedoch gezeigt, dass PTFE ebenfalls für einen Einsatz als statische Dichtung geeignet ist. Formabweichungen, die bei elastomeren Dichtungen durch lokale Kompressions- oder Ausdehnungsbewegungen kompensiert werden, werden bei statischen Dichtungen aus PTFE durch lokale Materialwanderung, also begrenzte Kriechvorgänge ausgeglichen. Dabei ist der Kriechvorgang aber lokal begrenzt, so dass die Vorspannung der statischen Dichtung erhalten bleibt und die Dichtung sicher in der Gehäusebohrung fixiert ist.

Aus der Dichtscheibe kann eine Dichtlippe zur Anlage an einem abzudichtenden Maschlnenelement ausgebildet sein. Dadurch weist die erfindungsgemäße Dichtung lediglich zwei Elemente auf: einen Tragring und eine Dichtscheibe. Die Dichtscheibe kann im Bereich der Dichtlippe mit einer Rückförderstruktur, beispielsweise einer Gewindenut ausgerüstet sein. Durch diese Rückförderstruktur verbessert sich die dynamisch Dichtheit bei geringer Reibbelastung.

In einer weiteren Ausgestaltung kann aus der Dichtscheibe eine Staublippe ausgebildet sein. Die Staublippe ragt axial in Richtung des abzudichtenden Maschinenelementes, liegt aber auf diesem nicht auf. Dabei kann die Staublippe, wenn die Dichtscheibe aus einem PTFE-Compound gebildet ist, ebenfalls aus einem PTFE-Compound bestehen.

An den Axialflansch des Tragrings schließt sich ein Radialflansch an und die Dichtscheibe bedeckt die dem Axialflansch abgewandte Seite des Radialflansches. Dadurch bedeckt die Dichtscheibe den Tragring einseitig. Dies ist insbesondere dann vorteilhaft, wenn die durch die Dichtscheibe bedeckte Seite des Tragrings mit einem aggressiven Medium beaufschlagt ist. Eine Dichtscheibe, die aus einem PTFE-Compound besteht, ist gegen eine Vielzahl von aggressiven Medien resistent.

An dem Tragring kann eine weitere Dichtscheibe angeordnet sein, aus der die Dichtlippe ausgebildet ist. Hierbei ist vorteilhaft, dass die Werkstoffwahl für die Dichtscheibe und für die weitere Dichtscheibe auf deren jeweiligen Einsatz optimiert werden kann. So kann die Dichtscheibe aus einem Werkstoff mit besonders geringer Kriechneigung und verbesserten Hafteigenschaften bestehen, während die weitere Dichtscheibe aus einem Werkstoff mit verringerten Reibwerten bestehen kann.

Die Dichtscheibe kann auf der dem Axialflansch abgewandten Seite des Radialflansches und die weitere Dichtscheibe auf der dem Axialflansch zugewandten Seite des Radialflansches angeordnet sein. Bei dieser Ausgestaltung ist auf jeder Seite des Radialflansches eine Dichtscheibe angeordnet. Dies ist insbesondere dann vorteilhaft, wenn die Werkstoffe der beiden Dichtscheiben untereinander unverträglich sind.

Die Dichtscheibe und die weitere Dichtscheibe können auf der dem Axialflansch abgewandten Seite des Radialflansches angeordnet sein. Bei dieser Ausgestaltung sind beide Dichtscheiben auf derselben Seite angeordnet Dabei überdeckt eine Dichtscheibe die andere zumindest teilwelse, so dass die Fixierung vereinfacht ist, weil die äußere Dichtscheibe die innere Dichtscheibe zusätzlich fixiert. Diese Ausgestaltung ist auch vorteilhaft in Bezug auf die Montage, weil die Dichtscheibe aus der die Dichtlippe ausgebildet Ist, bei der Montage einer Druckbelastung in Richtung auf den Tragring unterworfen Ist und sich nicht ablösen kann. Dabei kann in einer weiteren Ausgestaltung die Dichtscheibe die weitere Dichtscheibe zumindest teilweise bedecken. Bei dieser Ausgestaltung ist die dynamische Dichtlippe aus der weiteren Dichtscheibe ausgebildet. Diese ist besonders sicher fixiert, weil die weitere Dichtscheibe auf einer Seite an dem Tragring befestigt ist und auf der anderen Seiten von der Dichtscheibe bedeckt ist, aus der die Staubllppe ausgebildet ist.

Die Dichtscheibe kann zumindest teilweise von einem scheibenförmigen Element bedeckt sein. Aus diesem Element kann die Staublippe ausgebildet sein. Dabei kann das Element aus verschiedensten Werkstoffen bestehen; denkbare Werkstoffe sind elastomere oder metallische Werkstoffe, Scheiben aus Kunststoff oder Vliesstoff.

### Kurzbeschreibung der Zeichnung

Einige Ausführungsbeispiele der erfindungsgemäßen Dichtung werden nachfolgend anhand der Figuren näher erläutert. Diese zeigen, jeweils schematisch:
- Fig. 1: eine Dichtung mit einer Dichtscheibe;
- Fig. 2: eine Dichtung mit einer Dichtscheibe und einer weiteren Dichtscheibe;
- Fig. 3: eine Dichtung bei der die Dichtscheibe eine weitere Dichtscheibe bedeckt;
- Fig. 4: eine Dichtung mit einer Dichtscheibe und einem scheibenförmigen Element.

### Ausführung der Erfindung

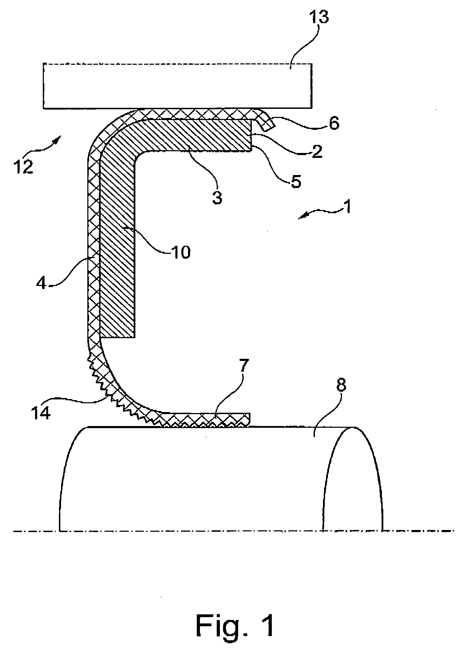

Figur 1 zeigt eine Dichtung 1 zur Abdichtung einer Gehäusebohrung 12 in einem Gehäuse 13. Die Dichtung 1 weist einen Tragring 2 aus metallischem Werkstoff auf, wobei der Tragring 2 mit einem Axialflansch 3 versehen ist. Ferner weist die Dichtung 1 eine Dichtscheibe 4 aus einem PTFE-Compound auf, die an dem Tragring 2 angeordnet ist und den Axialflansch 3 außenumfangsseitig umgibt. An den Axialflansch 3 des Tragrings 2 schließt sich ein Radialflansch 10 und die Dichtscheibe 4 bedeckt die dem Axialflansch 3 abgewandte Seite des Radialflansches 10. Die Dichtscheibe 4 ist mittels einer Klebeschicht stoffschlüssig mit dem Tragring 2 verbunden. Die Dichtscheibe 4 ist so ausgestaltet, dass sie an dem freien Ende 5 des Axialflansches 3 übersteht und dadurch einen Überstand 6 ausbildet. Der Überstand 6 ist radial nach Innen in Richtung der Mittelachse abgebogen ist und bildet eine Durchmesserreduzierung. Aus der Dichtscheibe ist ferner eine Dichtlippe 7 zur Anlage an einem abzudichtenden Maschinenelement 8 ausgebildet. Die Dichtlippe 7 ist mit einer schraubengangförmigen Förderstruktur 14 ausgerüstet.

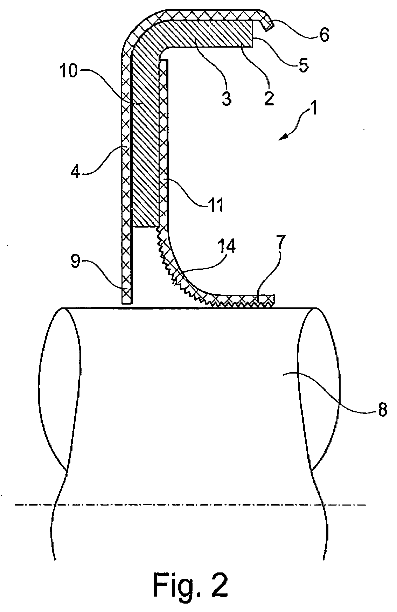

Figur 2 zeigt eine Dichtung 1 mit einem Tragring 2 aus Kunststoff auf, wobei der Tragring 2 mit einem Axialflansch 3 versehen ist. Ferner weist die Dichtung 1 eine Dichtscheibe 4 aus einem PTFE-Compound auf, die an dem Tragring 2 angeordnet ist und den Axialflansch 3 außenumfangsseitig umgibt. Die Dichtscheibe 4 ist mittels einer Klebeschicht stoffschlüssig mit dem Tragring 2 verbunden. Die Dichtscheibe 4 Ist so ausgestaltet, dass sie an dem freien Ende 5 des Axialflansches 3 übersteht und dadurch einen Überstand 6 ausbildet Der Überstand 6 ist radial nach innen in Richtung der Mittelachse abgebogen ist und bildet eine Durchmesserreduzierung. Aus der Dichtscheibe 4 ist eine Staublippe ausgebildet. Auf der der Dichtscheibe 4 abgewandten Seite des Tragrings 2, also auf der dem Axialflansch 3 zugewandten Seite des Radialflansches 10, ist eine weitere Dichtscheibe 11 angeordnet. Diese besteht ebenfalls aus einem PTFE-Compound. Aus der weiteren Dichtscheibe 11 Ist die Dichtlippe 7 ausgebildet. Die Dichtlippe 7 ist mit einer schraubengangförmigen Förderstruktur 14 ausgerüstet.

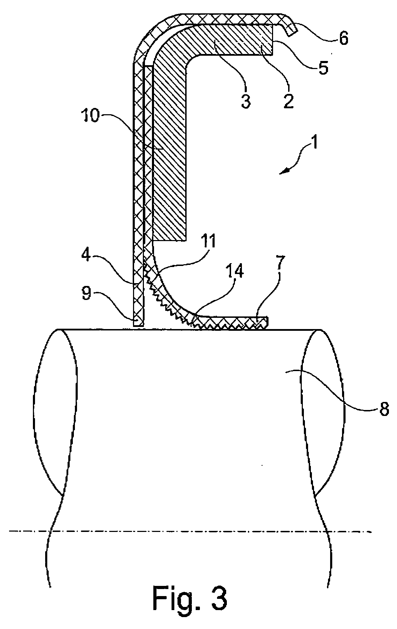

Figur 3 zeigt eine Dichtung 1 gemäß Figur 2, wobei die Dichtscheibe 4 und die weitere Dichtscheibe 11 auf der dem Axialflansch 3 abgewandten Seite des Radialflansches 10 angeordnet sind und wobei die Dichtscheibe 4 die weitere Dichtscheibe 11 teilweise bedeckt

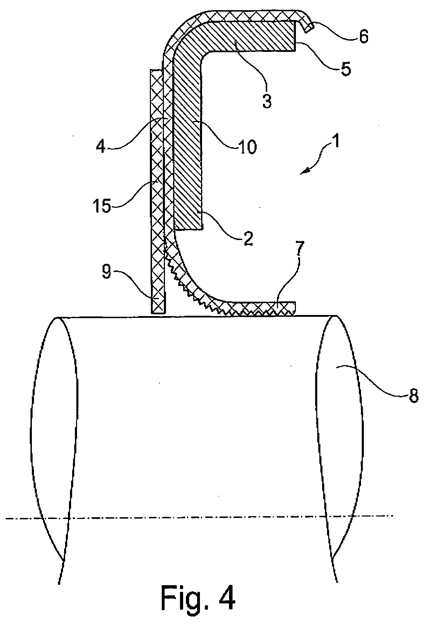

Figur 4 zeigt eine Dichtung 1 gemäß Figur 1, wobei auf der Dichtscheibe 4 auf der dem Radialflansch 10 abgewandten Seite ein scheibenförmiges Element 15 befestigt ist, welches die Dichtscheibe 4 teilweise bedeckt. Aus dem Element 15 ist eine Staublippe 9 ausgebildet und das Element besteht aus einem Vliesstoff.

## Patentansprüche

1. Dichtung (1), umfassend einen Tragring (2) mit einem Axialflansch (3),
einen an diesen anschließenden Radialflansch (10)
und einer Dichtscheibe (4), die an dem Tragring (2) angeordnet ist und
den Axialflansch (3) außenumfangsseitig umgibt, vollständig bedeckt, an diesem anliegt und stoffschlüssig mit dem Axialflansch (3) verbunden ist,
und , wobei der Axialflansch (3) ein freies Ende (5) aufweist welches in Montagerichtung orientiert ist,
**dadurch gekennzeichnet, dass** die Dichtscheibe (4) an dem freien Ende (5) des Axialflansches (3) übersteht und dadurch einen Überstand (6) ausbildet,
der und das freie Ende (5) überdeckt, so dass die in axialer Richtung wirkenden Kräfte kein Abscheren der Dichtscheibe (4) von dem Axialflansch (3) bewirken können.

2. Dichtung nach Anspruch 1, **dadurch gekennzeichnet, dass** die Dichtscheibe (4) aus einem PTFE-Compound besteht.

3. Dichtung nach einem der Ansprüche 1 oder 2, **dadurch gekennzeichnet, dass** aus der Dichtscheibe (4) eine Dichtlippe (7) zur Anlage an einem abzudichtenden Maschinenelement (8) ausgebildet ist.

4. Dichtung nach einem der Ansprüche 1 oder 2, **dadurch gekennzeichnet, dass** aus der Dichtscheibe (4) eine Staublippe (9) ausgebildet ist. die dem Axialflansch (3) abgewandte Seite des Radialflansches (10) bedeckt

5. Dichtung nach einem der Ansprüche 1 bis 4, **dadurch gekennzeichnet, dass** an dem Tragring (2) eine weitere Dichtscheibe (11) angeordnet ist, aus der die Dichtlippe (7) ausgebildet ist.

6. Dichtung nach Anspruch 5, **dadurch gekennzeichnet, dass** die Dichtscheibe (4) auf der dem Axialflansch (3) abgewandten Seite des Radialflansches (10) und die weitere Dichtscheibe (11) auf der dem Axialflansch (4) zugewandten Seite des Radialflansches (10) angeordnet sind.

7. Dichtung nach Anspruch 5, **dadurch gekennzeichnet, dass** die Dichtscheibe (4) und die weitere Dichtscheibe (11) auf der dem Axialflansch (3) abgewandten Seite des Radialflansches (10) angeordnet sind.

8. Dichtung nach Anspruch 7, **dadurch gekennzeichnet, dass** die Dichtscheibe (4) die weitere Dichtscheibe (11) zumindest teilweise bedeckt.

9. Dichtung nach einem der Ansprüche 1 bis 8, **dadurch gekennzeichnet, dass** die Dichtscheibe (4) zumindest teilweise von einem scheibenförmigen Element (15) bedeckt ist.

## Claims

1. Seal (1) comprising a supporting ring (2) with an axial flange (3), a radial flange (10) adjoining the latter, and a sealing disc (4) which is arranged on the supporting ring (2) and surrounds and completely covers the axial flange (3) on the outer circumferential side, bears thereagainst and is connected to the axial flange (3) in an integrally bonded manner, and which covers that side of the radial flange (10) which faces away from the axial flange (3), wherein the axial flange (3) has a free end (5) which is oriented in the installation direction, **characterized in that** the sealing disc (4) projects beyond the free end (5) of the axial flange (3) and thereby forms a projecting length (6) which completely covers the axial flange, bears thereagainst and is connected to the axial flange (3) in an integrally bonded manner and overlaps the free end (5) such that the forces acting in the axial direction cannot cause the sealing disc (4) to shear off from the axial flange (3).

2. Seal according to Claim 1, **characterized in that** the sealing disc (4) is composed of a PTFE compound.

3. Seal according to either of Claims 1 and 2, **characterized in that** a sealing lip (7) is formed from the sealing disc (4) for bearing against a machine element (8) to be sealed off.

4. Seal according to either of Claims 1 and 2, **characterized in that** a dust lip (9) is formed from the sealing disc (4).

5. Seal according to one of Claims 1 to 4, **characterized in that** a further sealing disc (11) from which the sealing lip (7) is formed is arranged on the supporting ring (2).

6. Seal according to Claim 5, **characterized in that** the sealing disc (4) is arranged on that side of the radial flange (10) which faces away from the axial flange (3), and the further sealing disc (11) is arranged on that side of the radial flange (10) which faces the axial flange (4).

7. Seal according to Claim 5, **characterized in that** the sealing disc (4) and the further sealing disc (11) are arranged on that side of the radial flange (10) which faces away from the axial flange (3).

8. Seal according to Claim 7, **characterized in that** the sealing disc (4) at least partially covers the further sealing disc (11).

9. Seal according to one of Claims 1 to 8, **characterized in that** the sealing disc (4) is at least partially covered by a disc-shaped element (15).

## Revendications

1. Garniture d'étanchement (1) comprenant une bague de support (2) pourvue d'une aile axiale (3) et d'une aile radiale (10) se rattachant à cette dernière,
et un disque d'étanchement (4) qui est disposé sur ladite bague de support (2) et entoure l'aile axiale (3) côté pourtour extérieur, recouvre intégralement cette dernière contre laquelle il est en applique, est relié matériellement à ladite aile axiale (3),
et recouvre le côté de l'aile radiale (10) tourné à l'opposé de ladite aile axiale (3), laquelle aile axiale (3) présente une extrémité libre (5) orientée dans la direction du montage,
**caractérisée par le fait que** le disque d'étanchement (4) dépasse de l'extrémité libre (5) de l'aile axiale (3), donnant ainsi naissance à une zone (6) en débord
recourbée radialement vers l'intérieur dans la direction de l'axe médian et recouvrant ladite extrémité libre (5), de telle sorte que les forces, agissant dans la direction axiale, ne puissent provoquer aucun cisaillement dudit disque d'étanchement (4) le dissociant d'avec ladite aile axiale (3).

2. Garniture d'étanchement selon la revendication 1, **caractérisée par le fait que** le disque d'étanchement (4) est constitué d'un composé de PTFE.

3. Garniture d'étanchement selon l'une des revendications 1 ou 2, **caractérisée par le fait qu'**une lèvre d'étanchement (7), conçue pour venir en applique contre un élément de machine (8) dont l'étanchéité doit être assurée, est formée à partir du disque d'étanchement (4).

4. Garniture d'étanchement selon l'une des revendications 1 ou 2, **caractérisée par le fait qu'**une lèvre antipoussière (9) est formée à partir du disque d'étanchement (4).

5. Garniture d'étanchement selon l'une des revendications 1 à 4, **caractérisée par le fait qu'**un disque supplémentaire d'étanchement (11), à partir duquel la lèvre d'étanchement (7) est formée, est disposé sur la bague de support (2).

6. Garniture d'étanchement selon la revendication 5, **caractérisée par le fait que** le disque d'étanchement (4) est placé du côté de l'aile radiale (10) tourné à l'opposé de l'aile axiale (3), le disque supplémentaire d'étanchement (11) étant placé du côté de ladite aile radiale (10) qui est tourné vers ladite aile axiale (3).

7. Garniture d'étanchement selon la revendication 5, **caractérisée par le fait que** le disque d'étanchement (4) et le disque supplémentaire d'étanchement (11) sont placés du côté de l'aile radiale (10) tourné à l'opposé de l'aile axiale (3).

8. Garniture d'étanchement selon la revendication 7, **caractérisée par le fait que** le disque d'étanchement (4) recouvre le disque supplémentaire d'étanchement (11), au moins en partie.

9. Garniture d'étanchement selon l'une des revendications 1 à 8, **caractérisée par le fait que** le disque d'étanchement (4) est recouvert, au moins en partie, par un élément discoïdal (15).
